(19) Europäisches Patentamt
European Patent Office
Office européen des brevets

(11) **EP 4 280 009 A1**

(12) **EUROPEAN PATENT APPLICATION**

(43) Date of publication:
**22.11.2023 Bulletin 2023/47**

(21) Application number: **22174676.1**

(22) Date of filing: **20.05.2022**

(51) International Patent Classification (IPC):
**G05D 1/00** (2006.01)      **G06F 11/16** (2006.01)

(52) Cooperative Patent Classification (CPC):
**G05D 1/0077; G06F 11/1637**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Volocopter GmbH**
**76646 Bruchsal (DE)**

(72) Inventors:
• **Ruf, Thomas**
 **77880 Sasbach (DE)**
• **Zwiener, Jan**
 **76337 Waldbronn (DE)**
• **Wolf, Stephan**
 **76133 Karlsruhe (DE)**

(74) Representative: **LBP Lemcke, Brommer & Partner Patentanwälte mbB**
 **Siegfried-Kühn-Straße 4**
 **76135 Karlsruhe (DE)**

(54) **AIRCRAFT, METHOD OF CONTROLLING AN AIRCRAFT AND DISTRIBUTED CONTROL SYSTEM IN AN AIRCRAFT**

(57)    We propose a method of controlling an aircraft, wherein a first lane and a second lane operate on same input data (ID) to produce respective computing results, said computing results comprising a combination of discrete system states ($H_0$, $H_1$, ... $H_m$) of the aircraft, the second lane being devised to reproduce computing results of the first lane in order to detect any deviations in said computing results and to initiate mitigation measures in the case of deviations, e.g., disabling a first lane output, comprising:

a) computing discrete system states ($H_0$, $H_1$, ... $H_m$) of the aircraft on said first lane based on said input data (ID), thus generating a first result;

b) monitoring said computation on said second lane based on the same input data (ID), thus generating a second result;

c) if said first result and said second result are different, examining, on the second lane, at least a number of elementary input variables ($R_0$, $R_1$, ... $R_n$), which input variables ($R_0$, $R_1$, ... $R_n$) represent said input data (ID) on a respective lane and which lead to said discrete system states ($H_0$, $H_1$, ... $H_m$);

d) if respective examined variables are identical within a predefined range on the first lane and on the second lane, performing a test on the second lane while using the first lane representation of the input data (ID), said test comprising at least one arithmetic operation that is used to compute said discrete system states ($H_0$, $H_1$, ... $H_m$) from the input data (ID), thus generating a test result, and initiating said measures only if said test result is outside a predefined acceptance range.

Fig. 2

**Description**

The invention relates to a method of controlling an aircraft, wherein a first lane and a second lane operate on same input data to produce respective computing results, said computing results comprising a combination of discrete system states of the aircraft, the second lane being devised to reproduce computing results of the first lane in order to detect any deviations in said computing results and to initiate mitigation measures in the case of deviations, e.g., disabling a first lane output, according to claim 1.

An overall state of the aircraft can be represented as a combination of individual discrete states or sub-states in the form of a tree, wherein every possible determination of a sub-state can be represented as a branching of said tree.

The invention also relates to a distributed control system in an aircraft, comprising a first lane and a second lane that operate on same given input data to produce respective computing results, said computing results comprising a combination of discrete system states of the aircraft, the second lane being devised to reproduce computing results of the first lane state by state in order to detect any deviations in said computing results and to initiate mitigation measures in the case of deviations, e.g., disabling a first lane output, according to claim 13.

The invention further relates to an aircraft, preferably an electrically powered VTOL (vertical take-off and landing) aircraft, most preferably a multicopter, according to claim 15.

Classical aviation control systems often consist of a COMMAND (COM lane or first lane) and MONITOR (MON lane or second lane) architecture. During normal use, COM lane produces and sends aircraft flight control signals to various entities, e.g., aircraft propulsion units, such as rotors. Based on the same given input data, the monitoring (MON) lane (second lane) attempts to reproduce the computing results of the COM lane (first lane), preferably state by state or bit by bit, in order to detect any deviations in the expected computing results and to initiate adequate mitigation measures, if necessary. In most cases, an adequate mitigation action is to disable the COM lane output (so-called isolation) to ensure that no erroneous signals are emitted.

Since it cannot be ruled out that systematic errors are present in any of the involved components, COM and MON can be devised as different computer architectures with different implementations at the hardware and software level. Such an architecture can be understood as a distributed system.

A (state by state or bit-by-bit) verification of computation results puts a high demand on the COM/MON architecture (i.e., the distributed system). The distributed computers and/or components must be synchronized not only temporally, but also the computation steps must lead to the same results in a given computation window, i.e., a predefined acceptance range. In addition to the problem of temporal synchronization, even with well-defined integer arithmetic both architectures must avoid any kind of undefined computational behavior ("UD"). For example, so-called "signed integer overflow" in the widely used C programming language must be considered as an undefined behavior.

In addition, complex algorithms in aviation are increasingly developed using so-called Model-Based-Design/Development approaches ("MBD" for short), which often involves floating-point calculations. Although the IEEE-754 standard for floating point arithmetic is widely used, computation results are still dependent on the actual implementation, the compiler, the target platform, and the compiler settings. The IEEE standard does not guarantee that the same program will deliver the same results, in particular bit-by-bit, on all conforming platforms. The associative property in mathematical expressions does not necessarily apply in general for floating point calculations. For example, when adding up floating point variables the order is not mandated by the standard, thus the results might differ, depending on the order chosen by the compiler. In addition, relative numerical errors must be handled, while cancelation, denormalized numbers, exceptions and trap handlers, rounding errors and optimizations made by the compiler make exact reproducibility of computation steps difficult. There are also different versions of the standard:
IEEE 754-1985 (IEC-60559:1989), IEEE 854-1987 (Standard for Radix-Independent Floating-Point Arithmetic), IEEE 754-2008 and IEEE 754-2019. Finally, certain CPU architectures on the market are only compliant to a subset of the IEEE-754 standard.

Thresholds or tolerance levels can be used to circumvent the above-mentioned problem to some extent, but if concrete states or branches (of said tree) or state transitions (changing from one branch to another) depend on floating point numbers, even small numerical deviations can lead to widely differing results or system states - even with identical initial input data. Especially a so-called "type 1" error (i.e., a "false positive"), where a monitor system incorrectly classifies a deviation as a failure, can lead to unnecessary shutdowns.

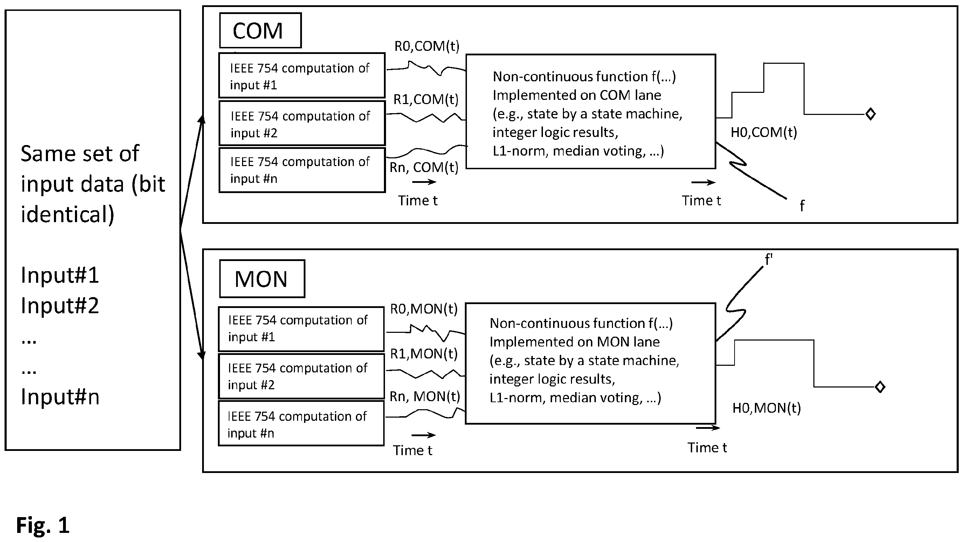

Figure 1 shows a block diagram which illustrates the above-mentioned problem. On the left-hand side, input data Input#1, ..., Input#n are generated (or provided), which data are then input into COM lane (first lane) and into MON lane (second lane). Each lane performs one or more IEEE-754 computations on each one of the input data. This leads to time-dependent variables $R_0(t), R_1(t), ...,R_n(t)$, which are similar but not identical between the COM and MON lane (cf. indices COM and MON, respectively). Blocks *f,f'* represent non-continuous functions implemented on COM lane and on MON lane, respectively, that operate on the data to produce a resulting state output denoted $H_{0,COM}(t)$ and $H_{0,MON}(t)$, respectively, which resulting state outputs $H_{0,COM}(t)$ and $H_{0,MON}(t)$ are significantly different. This amounts to saying that small variations in the input can cause larger variations in the output.

There is a need for a method and a system of the above-defined type which overcome the problem of incorrectly classifying small deviations - especially deviations based on standardized mathematical (or computational) operations - as a failure, thus avoiding unnecessary system shutdowns, which hamper normal operation of the system (i.e., an aircraft, although the invention is - in principle - not restricted to such use).

It is the object of the present invention to devise a method and a system of the above-defined type which overcome the problem of incorrectly classifying small deviations - especially deviations based on standardized mathematical (or computational) operations - as a failure, thus avoiding unnecessary system shutdowns.

This object is achieved by means of a method having the features of appended claim 1, by means of a system having the features of appended claim 13 and by means of an aircraft having the features of appended claim 15.

Advantageous further embodiments are defined in the dependent claims.

According to a first aspect of the invention, a method of controlling an aircraft, wherein a first lane and a second lane operate on same input data to produce respective computing results, said computing results comprising a combination of discrete system states ($H_0, H_1, ... H_m$) of the aircraft, the second lane being devised to reproduce computing results of the first lane in order to detect any deviations in said computing results and to initiate mitigation measures in the case of deviations, e.g., disabling a first lane output, comprising:

a) computing discrete system states ($H_0, H_1, ... H_m$) of the aircraft on said first lane based on said input data, thus generating a first result;

b) monitoring said computation on said second lane based on the same input data (ID), thus generating a second result;

c) if said first result and said second result are different, examining, on the second lane, at least a number of elementary input variables ($R_0, R_1, ... R_n$), which input variables ($R_0, R_1, ... R_n$) represent said input data on a respective lane and which lead to said discrete system states ($H_0, H_1, ... H_m$);

d) if respective examined variables are identical within a predefined range on the first lane and on the second lane, performing a test on the second lane while using the first lane representation of the input data, said test comprising at least one arithmetic operation that is used to compute said discrete system states ($H_0, H_1, ... H_m$) from the input data, thus generating a test result, and initiating said measures only if said test result is outside a predefined acceptance range.

The input data may have different representations on the first lane and on the second lane, respectively, which may be due to different (hardware) equipment being used to implement said two lanes. This may involve an IEEE-754 computation in connection with said input data.

An alternative formulation of the inventive concept relates to a method of controlling an aircraft, wherein a first lane and a second lane operate on same given input data to produce respective computing results, said computing results comprising a combination of discrete system states of the aircraft, the second lane being devised to reproduce computing results of the first lane state by state in order to detect any deviations in said computing results and to initiate mitigation measures in the case of deviations, e.g., disabling a first lane output, comprises:

a) computing, on the second lane, by using said same given input data, different branches for said discrete system states that are possible on the first lane and comparing, e.g., bit by bit, corresponding computing results with respect to computing results of the first lane; and

b) in the case of a differing computing result between first lane and second lane for at least one of said branches, breaking up or reducing a respective discrete branching logic of a corresponding discrete system state to a level of elementary input variables ($R_0, R_1, ... R_n$), which input variables represent said input data and which lead to said corresponding discrete system state ($H_0, H_1, ... H_m$), including examining, on the second lane, at least a number of said input variables, preferably all of said input variables, individually in their respective form on said first lane and on said second lane and deciding, based on a first predefined criterion, preferably a statistical consideration and/or a corresponding tolerance, whether said examined input variables, i.e., their respective data, are assumed to be identical between said first lane and said second lane and whether, for assumed identical data, said corresponding discrete system state is plausible based on a second predefined criterion and/or within a predefined margin; and

c) initiating said mitigation measures only in case said data are not assumed to be identical and/or said corresponding discrete system state is implausible and/or outside said predefined margin.

In this context, said input variables can be regarded as mere containers that comprise respective data, which data can take on different forms between the first lane and the second lane, e.g., due to their respective implementation.

If the second lane comes to the conclusion that the results produced by the first lane are not plausible the appropriate measure could typically be an isolation (or shutdown) of a component in question. Additionally or alternatively, depending on the function of said component, an alert could be triggered to indicate to a pilot of the aircraft that a given component might produce erroneous results. For example, a potentially defective flight control unit would be shut down, but a remaining energy indication calculation would have an alert to notify the pilot that the remaining energy indication might be wrong.

In the present description, "possible states" defines a set of all states that lie within a range of expectation, which is based on a variance to be expected within the accuracy of the numerical processing of the input data. An example of such variance is well-known error propagation.

Another example would be median voting. In the following exemplary case, COM and MON receive different angular measurements from sensors 1 to 3:

COM: 10.0° (sensor 1),   10.9° (sensor 2),   11.0° (sensor 3);
MON: 10.1° (sensor 1),   11.0° (sensor 2),   10.9° (sensor 3).

From median voting, COM would choose sensor 2, while MON would choose sensor 3. Both corresponding states would probably be considered as possible states owing to the above definition.

On the other hand, "implausible states" comprises the set of all states that are not members of the possible states.

In the present description, "branching logic" refers to different computer/CPU instruction paths based on decision criteria as well as discrete numerical values and thresholds. The above-described median voting is an example for such branching logic.

In the present description, "computing, on the second lane, different branches for said discrete system states that are possible on the first lane" is supposed to mean that said second lane is devised to reproduce the same system states, based on the same input, that can be calculated (or produced by way of computation) on the first lane, but preferably with a different implementation (hardware and/or software), in order not to produce common systemic errors.

In the present description, "deciding [...] whether, for assumed identical data, said corresponding discrete system state is plausible based on a second predefined criterion and/or within a predefined margin" may comprise that the second lane performs a test using the first lane representation of the input data (or variables) and verifies whether or not a result of this test meets said second predefined criterion and/or lies within said predefined margin. Said test may be a statistical hypothesis test. Again, median voting is a good example, where the three inputs (sensor 1 to 3) present normally distributed noise.

According to a second aspect of the invention, a distributed control system in an aircraft, comprising a first lane and a second lane that operate on same given input data to produce respective computing results, said computing results comprising a combination of discrete system states of the aircraft, the second lane being devised to reproduce computing results of the first lane state by state in order to detect any deviations in said computing results and to initiate mitigation measures in the case of deviations, e.g., disabling a first lane output, wherein the second lane is devised for:

a) computing different branches for said discrete system states that are possible on the first lane and comparing corresponding computing results with respective computing results from the first lane; and

b) in the case of a differing computing result between first lane and second lane for at least one of said branches, breaking up a respective discrete branching logic of a corresponding discrete system state to a level of elementary input variables ($R_0, R_1, ... R_n$), which input variables represent said input data and which lead to said corresponding discrete system state ($H_0, H_1, ... H_m$), including examining, on the second lane, at least a number of said input variables, preferably all of said input variables, individually in their respective form on said first lane and on said second lane and deciding, based on a first predefined criterion, preferably a statistical consideration and/or a corresponding tolerance, whether said examined input variables, i.e., their respective data, are assumed to be identical between said first lane and said second lane and whether, for assumed identical data, said corresponding discrete system state is plausible based on a second predefined criterion and/or within a predefined margin; and

c) initiating said mitigation measures only in case said data are not assumed to be identical and/or said corresponding discrete system state is implausible and/or outside said predefined margin;

wherein preferably said first lane and said second lane are devised using computer architectures with different implementations at the hardware and/or software level.

According to a third aspect of the present invention, an aircraft, preferably an electrically powered VTOL aircraft, comprises a system in accordance with the invention.

In other words, two principal approaches are being applied concurrently: The different branches for discrete system states or system state transitions that are possible (and plausible) on the first lane (COM) are computed and evaluated on the second lane (MON). If required, i.e., in the case of a mismatch, the discrete branching logic leading to different system states or their transition is broken up into the elementary input variables ($R_0, R_1, ... R_n$), which can be continuously measured values and which lead to (in general by means of a number of arithmetic computations) said discrete branches or corresponding system states ($H_0, H_1, ... H_m$). These input variables can be examined individually, in order to be able to decide, e.g., with a statistical consideration and/or appropriate tolerances, whether a discrete system state under consideration is plausible and - preferably from a statistical view - still comprised within an expected (i.e., predefined) margin.

A practical example of such system state would be an aircraft that goes from a first system state "ON GROUND" to a second system stage "AIRBORNE". To transition from "ON GROUND" to "AIRBORNE", a plurality of variables (with corresponding data) are evaluated. For example: the reading of a thrust control input lever must be above a certain positive threshold (with this the pilot signals the intention to take off and go airborne) (= input 1), the rotation rates of AHRS 1 must be below 1°/s (= input 2), and the rotation rates of AHRS 2 must be below 1°/s (= input 3) as well. "AHRS" is the attitude and heading reference system as an example sensor that provides relevant measurements (e.g., a roll angle or a pitch angle). Input 1 is analogous to, e.g., the compressible force or pressure applied on a corresponding button as measured by using a sensor. Usually, if inputs 1 through 3 defined above are provided to either COM lane or MON lane (first and second lane, respectively), the resulting state should be the same. If this is not the case, the inventive method continues at step c).

In a further embodiment of the method in accordance with the invention, said first lane and said second lane use computer architectures with different implementations at the hardware and/or software level. In this way, systemic errors due to common implementations can be avoided.

In a further embodiment of the method in accordance with the invention, said input data are the same within a given computational standard, e.g., IEEE-754. They can be advantageously based on bit-identical initial input data, for instance sensor data, that is provided quasi continuously over time.

In a corresponding further embodiment of the method in accordance with the invention, said input data are based on bit-identical initial input data, e.g., sensor data.

In a further embodiment of the method in accordance with the invention, step c) comprises an independent read-in of said input data on said second lane. In this way, said data is available on said second lane and can be used to verify the computations on said first lane.

In a further embodiment of the method in accordance with the invention, step c) comprises a read-in of said computing results from said first lane on said second lane. In this way, said results are available on said second lane and can be used for comparison the computations on said second lane.

In yet a further embodiment of the method in accordance with the invention, step c) comprises the following sub-steps:

c1) defining said discrete system state as

$$H_i(t) := f_i\big(R_0(t), R_1(t), ..., R_n(t)\big),$$

where $H_i \in$ N, $i \in \{0, 1, ..., m\}$, wherein the individual variables $R_j$ are real numbers, $R_j \in \mathbb{R}$ , with $j \in \{0, 1, ..., n\}$ at a given time $t$, which variables are preferably devised as IEEE-754 floating point variables, and $f_i$ is a function processing a combination of said input data, which function can preferably be considered as a computational graph; and

c2) further assuming that said numbers $R_j(t)$ differ only by a predefined deviation $\sigma_j$ between first lane and second lane, and performing, by means of said function $f_i$, comparison operations between individual input data on first lane and on second lane, respectively, which comparison operations are preferably formulated as a statistical test; and

c3) performing step d) in accordance with an outcome of said comparison operations.

In this way, the input variables $R_j$, which can be quasi continuous-time variables, including their statistical properties, can be examined to evaluate the discrete system states $H_m$.

The above approach is valid for all IEEE-754 representation types, independent of the number of representation bits (e.g., 32-bit or 64-bit).

If deviations between the first lane (COM) and the second lane (MON) for said quantities $R_j$ are still in an expected (predefined) range, a discrete result that differs between the first lane (COM) and the second lane (MON) can be accepted and will not lead to any mitigation actions. The acceptance criterion is not limited to an overall result, but the second lane (MON) considers differences in said discrete results to answer the overall question, whether or not a system state $H_i$ calculated by the first lane (COM) can be confirmed by the second lane (MON), even if the second lane (MON) arrives at a different final computational result for a system state $H_i$ in total.

As stated above, in a further embodiment of the method in accordance with the invention, said numbers $R_j(t)$

can be continuous-time input variables, e.g., derived from sensor data. For example, some measurements may be available in the form of (signed/unsigned) integer measurements and are then converted to IEEE floating point variables, e.g., $R_j(t) = (float)sensor\_data_j$.

As also stated above, in a further embodiment of the method in accordance with the invention, for deviations of said numbers $R_j$ between first lane and second lane that are within a predefined acceptance range, a discrete result $H_i$ that differs between first lane and second lane is accepted without initiating said adequate mitigation measures in step d).

Statistical properties can be included in this process. This may specifically comprise the probability that individual variables, i.e., measurements $R_j$ differ and the probability that the overall result - which is derived from these measurements - differs.

The following scenario illustrates the inventive concept in exemplary fashion by means of a concrete minimal example with only a single state variable $H_0$:

Said state variable $H_0$ takes on concrete numerical values 0 or 1 at time $t$, and it is only dependent on a simple function, that is a single corresponding binary condition function $B_0$ at time t, depending on the input variables $R_0$ and $R_1$:

$$H_0(t) := f_0 = B_0\big(R_0(t), R_1(t)\big), \text{ with } B_0 \in \{0, 1\}.$$

In this simple example, the condition $B_0$ provides an answer to the question whether or not input variables $R_0$ and $R_1$ differ at time t:

$$B_0\big(R_0(t), R_1(t)\big) = \begin{cases} 1 \text{ if } R_0(t) = R_1(t) \\ 0 \text{ if } R_0(t) \neq R_1(t) \end{cases}$$

In other words: The condition $B_0$ is defined as $R_0(t)$ being equal to $R_1(t)$. So $B_0$ would be true (1) or false (0) depending on said comparison. The invention is, however, not limited to such simple conditions. The result $H_0$ of the first lane (COM), i.e., $H_{0,COM}(t)$ can now be checked by the second lane (MON) (result: $H_{0,MON}(t)$) by employing the following tests, given the precondition that the second lane (MON) has access to all variables of the first lane (COM) at time t.

In order to achieve this, in a corresponding further embodiment of the method in accordance with the invention, said the second lane can have access to all variables of the first lane at time t.

In a highly advantageous further embodiment of the method in accordance with the invention, which can be based on the above example, said comparison operations in step c2) comprise:

before performing the actual test, checking whether any two input variables $R_0$ and $R_1$ at time t are identical between first lane and second lane to within predefined deviations $\sigma_0$, $\sigma_1$, respectively, e.g., due to floating point processing differences:

$$u_0 = \frac{\left| R_{0,COM} - R_{0,MON} \right|}{\sigma_0}$$

$$u_1 = \frac{\left| R_{1,COM} - R_{1,MON} \right|}{\sigma_1}$$

wherein subscripts COM and MON, respectively, indicate input data on first lane and second lane, respectively;

the method further comprising, in step d), assuming identical input data, if the values $u_0$, $u_1$ are within a predefined acceptance range, and performing a test on the second lane while using the first lane representation of the input data (or variables):

$$u_2 = \frac{\left| R_{0,COM} - R_{1,COM} \right|}{\sigma_2},$$

and

checking whether or not the test value $u_2$ is within a predefined acceptance range, as defined by $\sigma_2$, and accepting a null hypothesis, i.e., $H_{0,COM}(t) = H_{0,MON}(t)$, thereby assuming that the discrete system state $H_0$ is plausible at time t.

Basically, any acceptance range can be defined here. For instance, $u_2$ (or $u_0$ and/or $u_1$) must be below 6 (or 2 or any other value) to meet a 6 (or 2)-sigma criterion.

The last assumption is possible even in case the discrete result $H_{0,MON}(t)$ is different from $H_{0,COM}(t)$ depending on the values $R_{0,MON}$ and $R_{1,MON}$. It basically states that, given the input data, $H_{0,COM}(t)$ is judged to be plausible even if its concrete value could not be reproduced by the second lane.

Especially if the deviations follow a statistical distribution function, probabilities can be modeled and considered. Thus, a probability for the overall result H can be calculated and the overall result can be rejected above a certain threshold (e.g., below 95% probability). However, this approach should only be followed if the reason for the deviations are actually stochastic processes and not systematic deviations due to, e.g., different processor architectures.

If the variables, i.e., their values, follow a normal or Gaussian distribution (without limitation), then the acceptance range (as given by the values $\sigma_j$ defined above) could be derived from said normal distribution. In case, however, of rounding errors due to floating point calculations or the like, a simple threshold could be sufficient.

In a corresponding further embodiment of the method according to the invention, for deviations of said numbers $R_j$ between first lane and second lane that follow a statistical distribution function, the method may comprise modelling and calculating probabilities for an overall result $H_i$ and rejecting said overall result above a certain threshold, e.g., below a predefined probability value. This may involve statistical hypothesis testing of normal distributed variables.

Furthermore, another embodiment of the method according to the invention may comprise deriving the acceptance range (as given by the values $\sigma_j$ defined above) from a statistical distribution, e.g., a normal or Gaussian distribution.

Further characteristics and advantages of the invention will become apparent from the following description of examples of embodiments based on the drawings.

Figure 1 illustrates the problem underlying the invention;

Figure 2 shows a flow chart of an embodiment of the method according to the invention; and

Figure 3 shows an aircraft according to the invention, which is equipped with a system according to the invention.

Figure 1 has been described in the introductory part of the specification.

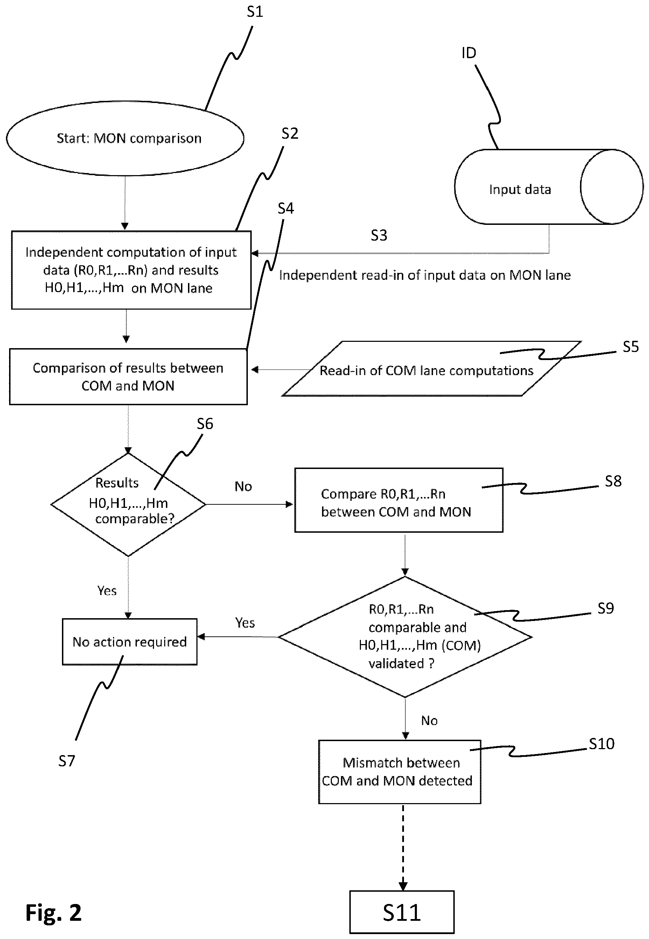

Figure 2 shows a flow chart of an embodiment of the method according to the invention.

In Figure 2, "MON" stands for the second lane or MONITOR lane, while "COM" denotes the first lane or COMMAND lane. Preferably, these two lanes are designed in different hardware and/or software.

The procedure starts in step S1 with a comparison on the second lane, which assumes that on the first lane a state of the system has already been calculated on the basis of certain input data, which input data preferably originate from a plurality of sensors and are provided continuously in time.

In step S2, an independent calculation of the input data and the corresponding results (system states) takes place on the second lane. For this purpose, at reference numeral S3, an independent reading of the said input data takes place on the second lane. The input data itself is shown at reference numeral ID.

Then, in step S4, the actual comparison between the results (system states) calculated on the first lane and on the second lane takes place. For this purpose, the calculation results of the first lane are read in to the second lane at reference numeral S5.

Then, in step S6, a query is made as to whether the results, i.e., the system states, are comparable or identical. If this query is answered in the affirmative ("yes"), the procedure is continued in step S7. Otherwise ("no"), the procedure continues in step S8.

In step S7, it is determined that no measures are necessary because the calculation results (system states) match. At this point the procedure ends.

In step S8, the comparison of the input data or the corresponding variables between the first lane and the second lane takes place, as already explained in detail in the general part of the description.

Subsequently, in step S9, the query is made whether the said input data are comparable (within certain limits) and whether, after carrying out the said tests, the system states calculated on the first lane can be validated by the second lane when using the same input data representation in terms of variables as on the first lane. If this query is answered in the affirmative ("yes"), the procedure again proceeds to step S7. Otherwise ("no"), it is determined in step S10 that a deviation or contradiction between the first lane and the second lane has been detected, or that a computational result on the first lane is not plausible given the input data and the computations on the second lane.

The procedure then continues in step S11, which may involve taking appropriate corrective actions. These actions regularly include switching off the first lane or deactivating its outputs, so that control of the system, in particular of an aircraft, can subsequently take place according to the second lane.

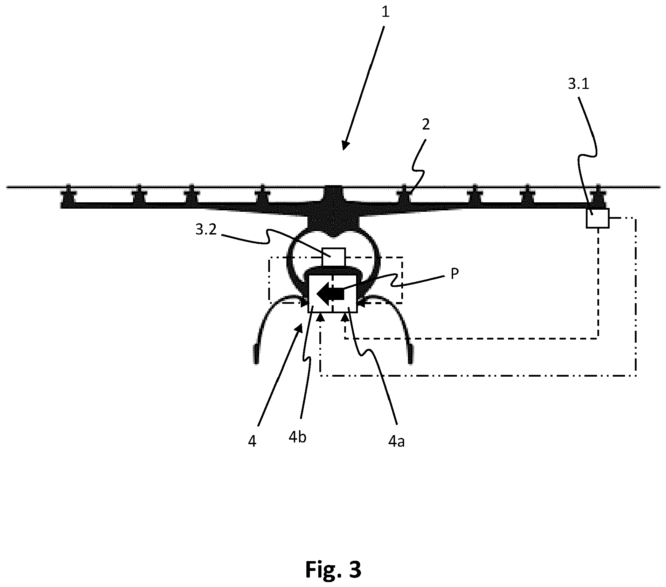

Figure 3 shows an aircraft 1 as a preferred example of a system in which the present invention can be used. Aircraft 1 is designed as a vertical take-off and landing (VTOL) multicopter aircraft that has a number of propulsion units in the form of electrically driven rotors, only one of which is designated with the reference numeral 2 in Figure 3 for reasons of clarity.

The aircraft 1 comprises a plurality of sensors 3.1, 3.2, which continuously provide sensor data and deliver them to a flight control unit 4 of the aircraft 1, which is symbolised in Figure 3 by corresponding dashed or dash-dotted arrows.

As described many times above, the flight control unit 4 of the aircraft 1 is a twolane unit and comprises a first lane (COM) 4a and a second lane (MON) 4b. As can be seen in Figure 3, the sensor data (in its initial form) is made available to both lanes 4a, 4b in bit-identical fashion.

As described above, the first lane 4a calculates a state of the aircraft 1 from the sensor data and uses this state for further flight control of the aircraft 1, for example to control the propulsion units 2, which is not shown further in Figure 3.

The second lane 4b is intended - as described many times - to check the calculations or computations of the first lane 4a. For this purpose, the calculation results of the first lane 4a are made available in the second lane 4b, which is symbolised by the arrow P in Figure 3 (compare step S5 in Figure 2). If necessary, the first lane 4a can be switched off and the aircraft 1 can be controlled by the second lane 4b.

**Claims**

1. A method of controlling an aircraft (1), wherein a first lane (4a) and a second lane (4b) operate on same input data (ID) to produce respective computing results, said computing results comprising a combination of discrete system states ($H_0, H_1, ... H_m$) of the aircraft (1), the second lane (4b) being devised to reproduce computing results of the first lane (4a) in order to detect any deviations in said computing results and to initiate mitigation measures in the case of deviations, e.g., disabling a first lane (4a) output, comprising:

   a) computing discrete system states ($H_0, H_1, ... H_m$) of the aircraft (1) on said first lane (4a) based on said input data (ID), thus generating a first result;
   b) monitoring said computation on said second lane (4b) based on the same input data (ID), thus generating a second result;
   c) if said first result and said second result are different, examining, on the second lane (4b), at least a number of elementary input variables ($R_0, R_1, ... R_n$), which input variables ($R_0, R_1, ... R_n$) represent said input data (ID) on a respective lane (4a, 4b) and which lead to said discrete system states ($H_0, H_1, ... H_m$);
   d) if respective examined variables are identical within a predefined range on the first lane (4a) and on the second lane (4b), performing a test on the second lane (4b) while using the first lane (4a) representation of the input data (ID), said test comprising at least one arithmetic operation that is used to compute said discrete system states ($H_0, H_1, ... H_m$) from the input data (ID), thus generating a test result, and initiating said measures only if said test result is outside a predefined acceptance range.

2. The method of claim 1, wherein said first lane (4a) and said second lane (4b) use computer architectures with different implementations at the hardware and/or software level.

3. The method of claim 1 or 2, wherein said input data are the same within a given computational standard, e.g., IEEE-754.

4. The method of claim 3, wherein said input data are based on bit-identical initial input data, e.g., sensor data.

5. The method of any one of claims 1 through 4, wherein step c) comprises an independent read-in of said input data on said second lane (4b).

6. The method of any one of claims 1 through 5, wherein step c) comprises a read-in of said computing results from said first lane (4a) on said second lane (4b).

7. The method of any one of claims 1 through 6, wherein step c) comprises:

c1) defining said discrete system states as

$$H_i(t) := f_i\big(R_0(t), R_1(t), ..., R_n(t)\big),$$

wherein $H_i \in \mathbb{N}$, $i \in \{0,1, ...,m\}$, and the individual variables $R_j$ are real numbers, $R_j \in \mathbb{R}$, with $j \in \{0,1, ...,n\}$ at a given time $t$, which variables are preferably devised as IEEE-754 floating point variables, and $f_i$ is a function processing a combination of said input data, which function can preferably be considered as a computational graph;

c2) further assuming that said numbers $R_j(t)$ differ only by a predefined deviation $\sigma_j$ between first lane (4a) and second lane (4b), and performing, by means of said function $f_i$, comparison operations between individual input data on first lane (4a) and second lane (4b), respectively, which comparison operations are preferably formulated as a statistical test; and

c3) performing step d) in accordance with an outcome of said comparison operations.

8. The method of claim 7, wherein said numbers $R_j(t)$ are continuous-time input variables, e.g., derived from sensor data.

9. The method of claim 7 or 8, wherein for deviations of said numbers $R_j$ between first lane (4a) and second lane (4b) within a predefined acceptance range, a discrete result that differs between first lane (4a) and second lane (4b) is accepted without initiating said adequate mitigation measures in step c).

10. The method of any one of claims 1 through 9, wherein the second lane (4b) has access to all variables of the first lane (4a) at time t.

11. The method of any one of claims 1 through 10 with reference to claim 7, wherein said comparison operations in step c2) comprise:

checking whether any two input variables $R_0$ and $R_1$ at time t are identical between first lane (4a) and second lane (4b) to within predefined deviations $\sigma_0$, $\sigma_1$, respectively, e.g., due to floating point processing differences:

$$u_0 = \frac{\left|R_{0,COM} - R_{0,MON}\right|}{\sigma_0}$$

$$u_1 = \frac{\left|R_{1,COM} - R_{1,MON}\right|}{\sigma_1}$$

wherein subscripts COM and MON, respectively, indicate input data on first lane (4a) and second lane (4b), respectively;

the method further comprising, in step d), assuming identical input data, if values $u_0$, $u_1$ are within a predefined acceptance range, and performing a test on the second lane (4b) while using the first lane (4a) representation of the input data:

$$u_2 = \frac{\left|R_{0,COM} - R_{1,COM}\right|}{\sigma_2};$$

and

checking whether or not test value, $u_2$ is within a predefined acceptance range and accepting a null hypothesis, $H_{0,COM}(t) = H_{0,MON}(t)$,, thereby assuming that discrete system state $H_0$ is plausible at time t.

12. The method of any one of claims 1 through 11 with reference to claim 7, wherein for deviations of said numbers $R_j$ between first lane (4a) and second lane (4b) that follow a statistical distribution function, the method comprises: modelling and calculating probabilities for an overall result $H_i$ and rejecting said overall result above a certain threshold, e.g., below a predefined probability value.

13. A distributed control system in an aircraft (1), comprising a first lane (4a) and a second lane (4b) that operate on same given input data to produce respective computing results, said computing results comprising a combination of discrete system states ($H_0, H_1, ... H_m$) of the aircraft (1), the second lane (4b) being devised to reproduce computing results of the first lane (4a) state by state in order to detect any deviations in said computing results and to initiate mitigation measures in the case of deviations, e.g., disabling a first lane (4a) output, wherein the second lane (4b) is devised for:

a) computing different branches for said discrete system states ($H_0, H_1, ... H_m$) that are possible on the first lane (4a) and comparing corresponding computing results with respective computing results from the first lane (4a); and

b) in the case of a differing computing result between first lane (4a) and second lane (4b) for at least one of said branches, breaking up a respective discrete branching logic of a corresponding discrete system state ($H_0, H_1, ... H_m$) to a level of elementary input variables ($R_0, R_1, ... R_n$), which input variables represent said input data and which lead to said corresponding discrete system state ($H_0, H_1, ... H_m$), including examining, on the second lane (4b), at least a number of said input variables, preferably all of said input variables, individually in their respective form on said first lane (4a) and on said second lane (4b) and deciding, based on a first predefined criterion, preferably a statistical consideration and/or a corresponding tolerance, whether said examined input variables, i.e., their respective data, are assumed to be identical between said first lane (4a) and said second lane (4b) and whether, for assumed identical data, said corresponding discrete system state ($H_0, H_1, ... H_m$) is plausible based on a second predefined criterion and/or within a predefined margin; and

c) initiating said mitigation measures only in case said data are not assumed to be identical and/or said corresponding discrete system state ($H_0, H_1, ... H_m$) is implausible and/or outside said predefined margin; wherein preferably said first lane (4a) and said second lane (4b) are devised using computer architectures with different implementations at the hardware and/or software level.

14. The system of claim 13, wherein the system, preferably the second lane (4b), is further adapted to perform the method of any one of claims 2 through 12.

15. An aircraft (1), preferably an electrically powered VTOL aircraft, comprising the system of claim 13 or 14.

Fig. 1

EP 4 280 009 A1

S1

ID

Start: MON comparison

Input data

S2

S4

S3

Independent computation of input data (R0,R1,...Rn) and results H0,H1,...,Hm on MON lane

Independent read-in of input data on MON lane

Comparison of results between COM and MON

Read-in of COM lane computations

S5

S6

Results H0,H1,...,Hm comparable?

No

Compare R0,R1,...Rn between COM and MON

S8

Yes

No action required

Yes

R0,R1,...Rn comparable and H0,H1,...,Hm (COM) validated ?

S9

S7

No

Mismatch between COM and MON detected

S10

**Fig. 2**

S11

**Fig. 3**

Europäisches
Patentamt

European
Patent Office

Office européen
des brevets

# EUROPEAN SEARCH REPORT

**Application Number**

EP 22 17 4676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 611 033 B1 (KOVALAN MARK A [US] ET AL) 4 April 2017 (2017-04-04) | 1-6,10 | INV.<br>G05D1/00<br>G06F11/16 |
| Y | * column 6, lines 23-51 * | 13-15 | |
| A | * column 7, lines 4-12; claim 1; figure 1 * | 7-9,11,12 | |
| | * column 8, lines 28-67 * | | |
| | * column 1, lines 31-39 * | | |
| | ----- | | |
| A | WO 2020/097166 A2 (BAE SYS CONTROLS INC [US]) 14 May 2020 (2020-05-14) | 1-15 | |
| | * paragraph [0005] * | | |
| | ----- | | |
| Y | US 9 037 933 B1 (JOSHI KIRAN [US]) 19 May 2015 (2015-05-19) | 13-15 | |
| A | * column 6, lines 49-61 * | 1-12 | |
| | ----- | | |

TECHNICAL FIELDS SEARCHED (IPC)

G05D

The present search report has been drawn up for all claims

| Place of search | Date of completion of the search | Examiner |
|---|---|---|
| Munich | 21 February 2023 | Polednicek, Milos |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| | Europäisches Patentamt |
|---|---|
| | European Patent Office |
| | Office européen des brevets |

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-12

    A method of controlling an aircraft (1), wherein a first lane (4a) and a second lane (4b) operate on same input data (ID) to produce respective computing results, said computing results comprising a combination of discrete system states (H0,H,,... Hm) of the aircraft (1), the second lane (4b) being devised to reproduce computing results of the first lane (4a) in order to detect any deviations in said computing results and to initiate mitigation measures in the case of deviations, e.g., disabling a first lane (4a) output, characterized by
    a) computing discrete system states (Ho, Hi, ... Hm) of the aircraft (1) on said first lane (4a) based on said input data (ID), thus generating a first result;
    b) monitoring said computation on said second lane (4b) based on the same input data (ID), thus generating a second result;
    c) if said first result and said second result are different, examining, on the second lane (4b), at least a number of elementary input variables (Ro,R1.. Rn), which input variables (Ro,R1,... Rn) represent said input data (ID) on a respective lane (4a, 4b) and which lead to said discrete system states (Ho, H1, ... Hm);
    d) if respective examined variables are identical within a predefined range on the first lane (4a) and on the second lane (4b), performing a test on the second lane (4b) while using the first lane (4a) representation of the input data (ID), said test comprising at least one arithmetic operation that is used to compute said discrete system states (Ho,Hi,... Hm) from the input data (ID), thus generating a test result, and initiating said measures only if said test result is outside a predefined acceptance range.
    ---

2. claims: 13-15

    A distributed control system in an aircraft (1), comprising a first lane (4a) and a second lane (4b) that operate on same given input data to produce respective computing results, said computing results comprising a combination of discrete system states (Ho, H1, ... Hm) of the aircraft (1), the second lane (4b) being devised to reproduce computing results of the first lane (4a) state by state in order to detect any deviations in said computing results and to initiate mitigation measures in the case of deviations, e.g., disabling a first lane (4a) output characterized by
    a) computing different branches for said discrete system states (Ho, H1, ... Hm) that are possible on the first lane (4a) and comparing corresponding computing results with respective computing results from the first lane (4a); and

page 1 of 2

Europäisches
Patentamt

European
Patent Office

Office européen
des brevets

**LACK OF UNITY OF INVENTION
SHEET B**

Application Number

EP 22 17 4676

The Search Division considers that the present European patent application does not comply with the requirements of unity of invention and relates to several inventions or groups of inventions, namely:

b) in the case of a differing computing result between first lane (4a) and second lane (4b) for at least one of said branches, breaking up a respective discrete branching logic of a corresponding discrete system state (Ho, H1, ... Hm) to a level of elementary input variables (R0,R1,... Rn), which input variables represent said input data and which lead to said corresponding discrete system state (Ho, H1, ... Hm), including examining, on the second lane (4b), at least a number of said input variables, preferably all of said input variables, individually in their respective form on said first lane (4a) and on said second lane (4b) and deciding, based on a first predefined criterion, preferably a statistical consideration and/or a corresponding tolerance, whether said examined input variables, i.e., their respective data, are assumed to be identical between said first lane (4a) and said second lane (4b) and whether, for assumed identical data, said corresponding discrete system state (Ho, H1, ... Hm) is plausible based on a second predefined criterion and/or within a predefined margin; and
c) initiating said mitigation measures only in case said data are not assumed to be identical and/or said corresponding discrete system state (Ho, H1, ... Hm) is implausible and/or outside said predefined margin;
wherein preferably said first lane (4a) and said second lane (4b) are devised using computer architectures with different implementations at the hardware and/or software level.
---

## ANNEX TO THE EUROPEAN SEARCH REPORT
## ON EUROPEAN PATENT APPLICATION NO.

EP 22 17 4676

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2023

| Patent document cited in search report | | Publication date | Patent family member(s) | | Publication date |
|---|---|---|---|---|---|
| US 9611033 | B1 | 04-04-2017 | NONE | | |
| WO 2020097166 | A2 | 14-05-2020 | CN | 113260564 A | 13-08-2021 |
| | | | EP | 3877256 A2 | 15-09-2021 |
| | | | US | 10599534 B1 | 24-03-2020 |
| | | | WO | 2020097166 A2 | 14-05-2020 |
| US 9037933 | B1 | 19-05-2015 | US | 8381053 B1 | 19-02-2013 |
| | | | US | 8677202 B1 | 18-03-2014 |
| | | | US | 9037933 B1 | 19-05-2015 |

EPO FORM P0459

For more details about this annex : see Official Journal of the European Patent Office, No. 12/82